# EUROPÄISCHE PATENTSCHRIFT

(11) **EP 1 142 234 B1**
(45) Veröffentlichungstag und Bekanntmachung des Hinweises auf die Patenterteilung: **03.11.2004**
(21) Anmeldenummer: 99973596.2
(22) Anmeldetag: 17.11.1999
(51) Int. Cl.: H04L 12/64

(54) **ÜBERTRAGUNGSSYSTEM MIT ECHOUNTERDRÜCKUNG**
TRANSMISSION SYSTEM WITH ECHO CANCELLATION
SYSTEME DE TRANSMISSION AVEC ELIMINATION DE L'ECHO

(30) Priorität: 30.12.1998 AT 218998
(43) Veröffentlichungstag der Anmeldung: 10.10.2001
(73) Patentinhaber: Ericsson Austria GmbH, 1120 Wien (AT)
(72) Erfinder: ZIMMERMANN, Gerhard, A-1100 Wien (AT)
(74) Vertreter: Gibler, Ferdinand, Dipl.Ing. Dr.
(86) Internationale Anmeldenummer: PCT/AT1999/000278
(87) Internationale Veröffentlichungsnummer: WO 2000/041367

(56) Entgegenhaltungen:
- EP-A- 0 664 657
- GB-A- 2 177 877
- MIURA K ET AL: "CELL-BASED ECHO CANCELLER FOR VOICE COMMUNICATIONS OVER ATM NETWORKS" IEEE GLOBAL TELECOMMUNICATIONS CONFERENCE (GLOBECOM),US,NEW YORK, IEEE,1995, Seiten 77-82, XP000621459 ISBN: 0-7803-2510-9

## Beschreibung

Die Erfindung betrifft ein Übertragungssystem zur Übertragung von Sprachinformation innerhalb zumindest eines mehrere Teilnehmer verbindenden Datenübertragungs-Netzes, z.B. LAN, Intranet, Internet, in welchem die Übertragung mittels Datenpaketen auf der Grundlage zumindest eines gemeinsamen Protokolls, z.B. Internet-Protokolls, erfolgt, und jeder Teilnehmer über eine eine Sende- und Empfangseinheit sowie eine Sprach-Datenwandlereinheit beinhaltende Sprachdatenübertragungseinheit, gegebenenfalls einen Analog/Digital-Wandler und einen Digital/Analog-Wandler, sowie eine daran angeschlossene Sprech- und Hörvorrichtung mit dem Netz in Verbindung steht, wobei die Sprechvorrichtung oder der zwischengeschaltete Analog/Digital-Wandler über einen Additions-Eingang einer Echo-Unterdrückungseinheit und deren Ausgang mit der Sendeeinheit verbunden ist und ein Subtraktions-Eingang der Echo-Unterdrückungseinheit mit der Hörvorrichtung oder dem zwischengeschalteten Digital/Analog-Wandler verbunden ist.

In Netzwerken, wie z.B. LAN, Intranet, Internet o.ä., die auf einem standardisierten Protokoll, z.B. dem Internet-Protokoll basieren, ist jedem Netzteilnehmer eine Adresse zugeordnet, von der Daten an andere Teilnehmer gesendet bzw. an der von anderen Teilnehmern abgeschickte Daten empfangen werden können. Da auch Sprache in Form von digitalen Daten übertragbar ist, können solche Datenübertragungs-Netze auch zur Sprachübertragung herangezogen werden. Die Art des Netzwerks und des Übertragungsprotokolls ist im Rahmen der Erfindung nicht auf die vorstehend genannten bekannten Bezeichnungen eingeschränkt, die Erfindung läßt sich auch auf alle möglichen miteinander vernetzten Netzwerke anwenden, die an bestimmten Punkten über Transformationseinheiten (Gateways) miteinander verknüpft sein können.

Bei bisher bekannten Sprachübertragungssystemen der eingangs genannten Art erfolgt die Sprachübertragung in definierten Paketen, die von der Sendestelle an einen empfangenden Teilnehmer ausgesendet und von diesem in Empfang genommen werden. Die Pakete werden zu diesem Zweck in nacheinanderfolgender Reihenfolge aus den digitalisierten Abtastwerten des zu sendenden Sprachsignals zusammengesetzt und können für die Übertragung auf der Sendeseite entsprechend kodiert und nach ihrem Empfang auf der Empfängerseite dekodiert werden. Die empfangenen Abtastwerte werden wieder zu einem Sprachsignal zusammengesetzt, wobei unter Sprachsignal alle im hörbaren Bereich gelegenen, akustischen Schwingungen verstanden wird. Im Unterschied zur Übertragung über Telephonleitungen besteht die Besonderheit der Sprachübertragung in Datenübertragungsnetzen darin, daß die Übertragungsbandbreite vom Netzanbieter nicht immer garantiert wird. Ebenso erfolgen an verschiedenen Knoten je nach Vorliegen von freien Leitungen ständige Änderungen des vermittelten Pfades, über den die Übertragung der Datenpakete vorgenommen wird. Aufgrund der unterschiedlichen Laufzeiten oder unterschiedlichen Datenwege können später ausgesendete Datenpakete beim Empfänger früher ankommen als vor diesen ausgesendete Datenpakete. Durch derartige Verzögerungseffekte kann es geschehen, daß einzelne Datenpakete nicht zum richtigen Zeitpunkt beim Empfänger eintreffen und daher nicht rechtzeitig verfügbar sind. Weiters können die Datenpakete durch Übertragungsfehler verloren gehen.

Bei größeren Netzen, wie zum Beispiel im Internet, sind die Schwankungen der Übertragungsverzögerungen deutlich merkbar und hängen von der jeweiligen gerade vorhandenen Belastung durch die verschiedenen Teilnehmer ab. Neben tageszeitenbedingten Änderungen können durch bestimmte Ereignisse hervorgerufene Verlangsamungen auftreten, die in keiner Weise vorhersehbar sind.

Ein System zur Vermittlung und Übertragung von Sprachsignalen über ein paketvermittelndes Netzwerk, insbesondere über das Internet, und ein herkömmliches Telephon-Netzwerk ist z.B. in der WO-A-97/14238 beschrieben. Mit diesem ist eine Telephonverbindung von einem Telephon-Endgerät zu einem mit dem Internet verbundenen Rechner möglich.

Weiters zeigt die EP 0 664 657 A2 eine Schaltungsanordnung zur verzögerungslosen Signalverarbeitung innerhalb eines ATM-Netzwerks, mit dem aus einem STM-Netzwerk stammende, digitalisierte Sprachsignale an ein weiteres STM-Netzwerk übermittelt werden. Das bei einer Übertragung durch Impedanz-Fehlanpassungen entstehende Echosignal wird jeweils durch geeignete Subtraktion des gewichteten, empfangenen Signals vom Sendesignal entfernt. Um trotz der unterschiedlich großen Zeitverzögerungen zwischen Sende- und Empfangssignal eine Echoauslöschung zu ermöglichen, ist jeweils ein Puffer-Speicher vorgesehen, in dem das zu übertragende Signal für eine Auslöschung durch das gesendete Signal gespeichert ist. Die auf diese Weise ermöglichte Befreiung des Sprachsignals von störenden Echos betrifft nur den zu sendenden Anteil, während der durch den Teilnehmer empfangene Anteil keiner Korrektur zugeführt wird.

In der GB 2 177 877 A ist ein Paketvermittlungssystem für ein Datenübertragungssystem beschrieben, in dem Pakete mit unterschiedlicher Laufzeit übertragen werden. Zur Vermeidung von zu großen Verzögerungen einzelner Pakete wird eine Methode angewandt, bei der mit Hilfe von zusätzlicher, in den Paketen untergebrachter Information die auftretenden Zeitverzögerungen ausgeglichen werden können. Durch die besondere Kennzeichnung der einzelnen Pakete kann daher wieder ein synchroner Datenstrom gebildet werden. Pakete mit einer zu hohen Verzögerungszeit werden durch einen vorbestimmbaren Informationswert ersetzt. Die bei der Übertragung angewandte Echoauslöschung ist in herkömmlicher Weise jeweils nur auf das Sendesignal gerichtet.

Zusätzlich zu der im Übertragungsnetz auftretenden Verzögerung stören auch Echosignale die Sprachübertragung. Die akustische Kopplung zwischen einer Sprechvorrichtung, z.B. einem Mikrophon, und einer Hörvorrichtung, z.B. einem Lautsprecher, einer Hörkapsel o.ä., in einer Freisprecheinrichtung, in einem Telephonhörer o.ä. oder die elektrische Kopplung, die durch eine Gabelschaltung einer analogen Zweidraht-Telephonleitung entsteht, kann die Ausbildung solcher Echosignale hervorrufen.

Echosignale entstehen insbesondere dann, wenn die von einem Sprecher erzeugten akustischen Signale mehr oder weniger verzögert an dessen Ohr zurückkommen. Bei relativ kurzen Laufzeiten des Schalls, z.B. unter I ms, ruft das auftretende Echo keine Störungen hervor, da die natürliche akustische Kopplung zwischen Mund und Ohren oder Schallreflexionen im umgebenden Raum über Mund-Wand-Ohren ebenfalls Verzögerungen in derselben Größenordnung hervorrufen, denen das menschliche Gehör ständig ausgesetzt ist und daher vom Menschen nicht mehr bewußt wahrgenommen werden.

Bei längeren Echolaufzeiten, die durch Verzögerungen im Übertragungsweg entstehen, wie diese bei der Sprachübertragung in paketorientierten Datennetzwerken auftreten und die bis zu einigen 100 ms betragen können, ist das Echo je nach Lautstärke störend bzw. wird eine Kommunikation durch dieses fast unmöglich gemacht.

Durch geeignete Subtraktion des verzögerten Empfangssignals vom zu sendenden Signal können Echos unterdrückt werden. Dies kann sowohl in analoger Form mittels Summierschaltungen oder in digitaler Form vorzugsweise unter Verwendung eines Digitalen Signalprozessors (DSP) geschehen. Die Erfindung ist sowohl für die analoge als auch die digitale Form der Echounterdrückung geeignet.

Da Aufwand und Komplexität einer Echo-Unterdrückungseinheit proportional zur maximalen Echoverzögerungszeit sind, wird versucht, bei der Sprachübertragung über Datennetzwerke die Echos auf beiden Seiten des Netzwerkes, also sowohl beim Empfänger als auch beim Sender, lokal zu unterdrücken und damit zu verhindern, daß über das Datennetzwerk Echos übertragen werden.

Sollte jedoch auf der Seite eines Teilnehmers das Echo-Unterdrückungssystem versagen oder aus Kostengründen nicht implementiert sein, wird das dort entstehende Echo sich ungehindert zu dem mit diesem verbundenen Teilnehmer übertragen und stört dort den Gesprächsverlauf.

Die herkömmlichen Echo-Unterdrückungseinheiten, die solche Echos bewältigen können, sind hauptsächlich für Festnetztelephonie-Übertragungen und daher für feste, relativ kurze Verzögerungszeiten ausgelegt. Für Sprachübertragung über ein paketorientiertes Datennetzwerk mit Verzögerungszeiten im Bereich von 500 ms bis 1500 ms sind diese bekannten Einheiten jedoch nur begrenzt wirksam.

Durch die besonderen Eigenschaften einer paketorientierten Sprachübertragung kann eine herkömmliche Echo-Unterdrückungseinheit sogar eine Verschlechterung des Echoverhaltens bewirken. Wird etwa aufgrund der sich ständig ändernden Netzwerkseigenschaften das Echosignal gegenüber seiner ursprünglichen Zeitlage verschoben, liegen plötzlich im Empfangskanal sowohl das Echo als auch das zur Echounterdrückung erzeugte, verzögerte und invertierte Signal vor, die einander nicht mehr aufheben. Dieser Zustand bleibt solange erhalten, bis sich die Echo-Unterdrückungseinheit wieder neu eingestellt hat.

Gehen hingegen während der Übertragung einzelne Datenpakete verloren, wird das inverse Signal plötzlich hörbar, da es nicht auf das verlorengegangene, auszulöschende Signal trifft.

Aufgabe der Erfindung ist es daher, ein Übertragungssystem der eingangs genannten Art anzugeben, mit dem eine Echoauslöschung für hohe Verzögerungszeiten, insbesondere bei paketorientierten Datenübertragungen, auf technisch einfache und zuverlässige Weise ermöglicht wird.

Erfindungsgemäß wird dies dadurch erreicht, daß eine weitere Echo-Unterdrückungseinheit mit einem Additions- und einem Subtraktions-Eingang vorgesehen ist, deren Ausgang mit der Hörvorrichtung oder mit dem zwischengeschalteten Digital/Analog-Wandler verbunden ist, und daß der Subtraktions-Eingang mit der Sendeeinheit der Sprachdatenübertragungseinheit und der Additions-Eingang mit der Empfangseinheit der Sprachdatenübertragungseinheit verbunden ist.

Dadurch wird das durch den auf der jeweils anderen Seite des Datenübertragungsnetzes befindlichen Teilnehmer entstehende Echo beseitigt, indem von dem rückübertragenen Echosignal das bzw. die mindestens um die Netzverzögerungszeit verzögerte, in der Sprechvorrichtung ursprünglich erzeugte Sprachsignal bzw. ursprünglich erzeugte Sprachinformation subtrahiert wird. Die Subtraktion kann dabei wie vorstehend beschrieben in analoger oder in digitaler Form vorgenommen werden.

In weiterer Ausbildung der Erfindung kann vorgesehen sein, daß die weitere Echo-Unterdrückungseinheit einen Steuereingang zur Steuerung einer der Mindestverzögerungszeit des Netzwerks entsprechenden Speicher-Verzögerungszeit des Sprachsignals oder der Sprachinformation aufweist, wobei der Steuereingang mit dem Ausgang einer mit der Sprachdatenübertragungseinheit verbundenen Steuereinheit verbunden ist.

Über die Steuereinheit kann die jeweils aktuelle Netzverzögerungszeit festgestellt werden bzw. können verlorengegangene Datenpakete detektiert und die Ausbildung eines entsprechend verzögerten und invertierten Sendesignals unterdrückt werden, um zu verhindern, daß das für das fehlende Datenpaket gebildete, invertierte Signal an die Hörvorrichtung gelangt.

Gemäß einer weiteren Ausführungsform der Erfindung kann bei einem Übertragungssystem mit einer Echo-Unterdrückungseinheit, welche eine aus mehreren Verzögerungsgliedem gebildete Verzögerungskette umfaßt, vorgesehen sein, daß das erste Verzögerungsglied der Verzögerungskette eine Speicher-Verzögerungszeit aufweist, die größer oder gleich der minimalen Gesamtlaufzeit der Sprachdatensignale in beiden Richtungen des Datennetzwerkes entspricht.

Obgleich Echosignale selbst in einem Verzögerungsrahmen von max. 64 ms entstehen können, beträgt die Gesamtverzögerungszeit für das Datennetzwerk das 10- bis 20-fache. Der Aufwand für die Verzögerungsglieder und die damit verbundene Koeffizientenberechnung wächst proportional zur maximalen Echolaufzeit. Statt eine herkömmliche Verzögerungskette mit einer gleichmäßig verteilten Anzahl an Verzögerungsgliedem und dazwischen angeordneten Anzapfungen für die Gewichtung des verzögerten Signals mit Koeffizienten k vorzusehen, ermöglicht das mit einer relativ hohen Speicher-Verzögerungszeit ausgestattete, erste Verzögerungsglied eine Verzögerungszeit, die der minimalen Gesamtlaufzeit der Sprachsignale in beiden Richtungen entspricht. Unterhalb dieser Verzögerungszeit ist eine Übertragung nicht durchführbar, sodaß die dieser entsprechende Anzahl an Verzögerungsgliedem mit Anzapfungen zu diesem ersten Verzögerungsglied zusammengefaßt werden können. Die Echo-Unterdrückungseinheit arbeitet dann mit einer Grundverzögerung von z.B. 600ms und einem variablen Verzögerungsbereich von z.B. 600 ms bis 800 ms. Aufgrund der Gesamtlaufzeit innerhalb des Datenübertragungsnetzes können sich innerhalb des Grundverzögerungsbereichs keine Echos ausbilden, sodaß die entsprechenden Anzapfungen und Koeffizienten k eingespart werden können. Der Vorteil besteht nun darin, daß die Echo-Unterdrückungseinheit dadurch viel weniger Rechenleistung und Speicher verbraucht, da sowohl weniger Koeffizienten k berechnet werden müssen als auch weniger Multiplikationen für die Berechnung des inversen verzögerten Signals durchgeführt werden müssen.

Gemäß einer weiteren Ausführungsform der Erfindung kann die Speicher-Verzögerungszeit des ersten Verzögerungsgliedes der Verzögerungskette, vorzugsweise durch Auswertung der Zeitinformation des Echtzeit-Protokolls, über die Sprachdatenübertragungseinheit steuerbar sein. Damit kann eine ständige Anpassung der Grundverzögerungszeit des Übertragungsnetzes vorgenommen werden, sodaß sich die Anzahl der benötigten Verzögerungsglieder entsprechend gering halten läßt.

Weiters betrifft die Erfindung ein Verfahren zur Übertragung von Sprachinformation innerhalb zumindest eines mehrere Teilnehmer verbindenden Datenübertragungs-Netzwerkes, z.B. LAN, Intranet, Internet, in welchem die Übertragung mittels Datenpaketen auf der Grundlage zumindest eines gemeinsamen Protokolls, z.B. Internet-Protokolls, erfolgt, wobei die von jedem Teilnehmer über eine Empfangseinheit empfangene Sprachinformation in ein Sprachsignal gewandelt und über eine Hörvorrichtung wiedergegeben und das von jedem Teilnehmer über eine Sprechvorrichtung erzeugte Sprachsignal in Sprachinformation gewandelt und in einer Sendeeinheit gesendet wird, und wobei zur Echoauslöschung die über die Empfangseinheit empfangene Sprachinformation oder die in ein Sprachsignal gewandelte Sprachinformation verzögert und mit Koeffizienten gewichtet und von dem in der Sprechvorrichtung erzeugten Sprachsignal oder dem in eine entsprechende Sprachinformation gewandelten Sprachsignal subtrahiert wird.

Aufgabe der Erfindung ist es, ein derartiges Verfahren anzugeben, mit dem eine Echounterdrückung auch bei langen und sich ändernden Verzögerungszeiten innerhalb des Datenübertragungsnetzes realisierbar ist.

Erfindungsgemäß wird dies dadurch erreicht, daß von dem beim jeweils anderen Teilnehmer entstehenden und über das Datenübertragungsnetz übertragenen Echosignal auf der Seite des mit diesem verbundenen Teilnehmers das mittels einer Verzögerungskette mindestens um die Netzverzögerungszeit verzögerte, das bzw. die Echo verursachende und mit Koeffizienten gewichtete Sprachsignal oder Sprachinformation subtrahiert wird.

Dadurch kann auch die Auslöschung von Echos vorgenommen werden, die durch Übertragung in paketorientierten Netzwerken an den verursachenden Teilnehmer zurückkommen. Die Berücksichtigung der Netzverzögerungszeit bei der Verzögerung des bzw. der ursprünglich erzeugten Sprachsignals bzw. Sprachinformation ermöglicht eine wesentliche Reduktion des dazu erforderlichen Aufwands. Die Subtraktion kann digital oder analog vorgenommen werden.

In weiterer Ausbildung der Erfindung kann vorgesehen sein, daß der bei der Übertragung entstehende Verlust an Datenpaketen detektiert wird und in Abhängigkeit davon die Subtraktion des entsprechenden, verzögerten Sprachsignals oder der entsprechenden, verzögerten Sprachinformation unterdrückt wird.

Auf diese Weise wird die Ausbildung eines inversen Signals zur Echounterdrückung verhindert, das bei Ausbleiben des verlorengegangenen Datenpakets keine Auslöschung eines Echos bewirken sondern selbst ein Echosignal hervorrufen würde.

Weiters kann vorgesehen sein, daß bei Verlust eines oder mehrerer Datenpakete das jeweils vorangegangene Sprachdatenpaket wiederholt wird Die Empfangseinheit wiederholt das letzte Datenpaket, um die Pause zu überbrücken, die entsteht, wenn ein Datenpaket verlorengeht. Die Echo-Unterdrückungseinheit würde hier ein falsches Signal generieren, da sie ihrerseits mit den gesendeten Daten gespeist wird. Die Empfangseinheit verdoppelt dabei aber das alte Datenpaket, die mit den ursprünglich gesendeten Daten nicht zusammenpassen. Es wird daher entweder die Echo-Unterdrückung gesperrt oder es wird das letzte Datenpaket am Subtraktionseingang der Echo-Unterdrückungseinheit nochmals eingespeist.

Somit kann vorgesehen sein, daß bei Wiederholung des jeweils vorangegangenen Sprachdatenpakets die Subtraktion eines entsprechenden Sprachsignals bzw. einer entsprechenden Sprachinformation auf der Seite des verbundenen Teilnehmers unterdrückt wird. Damit wird jegliche Echoauslöschung verhindert und es kann zu keiner falschen Erzeugung von inversen Sprachsignalen bzw. inverser Sprachinformation innerhalb der Echo-Unterdrückungseinheit kommen.

Gemäß einer anderen Variante der Erfindung kann vorgesehen sein, daß bei Wiederholung des jeweils vorangegangenen Sprachdatenpakets das zugehörige gespeicherte Sprachsignal bzw. die zugehörige gespeicherte Sprachinformation , des verbundenen Teilnehmers mit Verzögerung und Gewichtung subtrahiert wird. Dadurch kann für die wiederholten Sprachdatenpakete das jeweils richtige inverse Sprachsignal bzw. die jeweils richtige inverse Sprachinformation subtrahiert werden.

Weiters kann vorgesehen sein, daß bei Auftreten einer Änderung der Netz-Verzögerungszeit die Koeffizienten k der Verzögerungskette auf Null gesetzt werden.

Für den Fall, daß über die Höhe der Änderung keine Aussage getroffen werden kann, wird durch diese Maßnahme gewährleistet, daß keine falschen Echos erzeugt und wiedergegeben werden.

Gemäß einer weiteren Variante der Erfindung kann vorgesehen sein, daß die Änderung der Netz-Verzögerungszeit gemessen wird, und daß die Werte der den Verzögerungsgliedem zugeordneten Koeffizienten k innerhalb der Verzögerungskette entsprechend dieser Änderung verschoben werden.

Dadurch kann die Steuerbarkeit der Speicher-Verzögerungszeit auf einfache Weise verwirklicht werden.

In bevorzugter Weise kann diese Verschiebung selbsttätig vorgenommen werden, indem in weiterer Ausbildung der Erfindung die Speicher-Verzögerungszeit des ersten Verzögerungsgliedes, vorzugsweise durch Auswertung der Zeitinformation des Echtzeit-Protokolls, über die Sprachdatenübertragungseinheit gesteuert wird, und die Verschiebung der Koeffizienten k innerhalb der Verzögerungskette automatisch mit der Veränderung der Verzögerungszeit des ersten Verzögerungsgliedes vorgenommen wird. Durch die relativ lange Verzögerungszeit des ersten Verzögerungsgliedes und deren Steuerbarkeit kann die Echo-Unterdrückung unabhängig von der Netz-Verzögerungszeit stets mit der gleichen Rechnerleistung bewältigt werden.

Nachfolgend wird die Erfindung anhand der in den beigeschlossenen Zeichnungen dargestellten Ausführungsbeispielen eingehend erläutert. Es zeigt dabei
Fig.1 ein Blockschaltbild eines Teils eines Übertragungssystems gemäß Stand der Technik;
Fig.2 ein Blockschaltbild einer Ausführungsform des erfindungsgemäßen Übertragungssystems;
Fig.3 eine Echo-Unterdrückungseinheit gemäß Stand der Technik;
Fig.4 eine weitere Ausführungsform des erfindungsgemäßen Übertragungssystems;
Fig.5 eine Echo-Unterdrückungseinheit für ein erfindungsgemäßes Übertragungssystem;
Fig.6 ein Blockschaltbild einer weiteren Ausführungsform des erfindungsgemäßen Übertragungssystems;
Fig.7 eine teilweise Darstellung einer weiteren Variante des erfindungsgemäßen Übertragungssystems und
Fig.8 ein Detail des Blockschaltbildes gemäß Fig. 6.

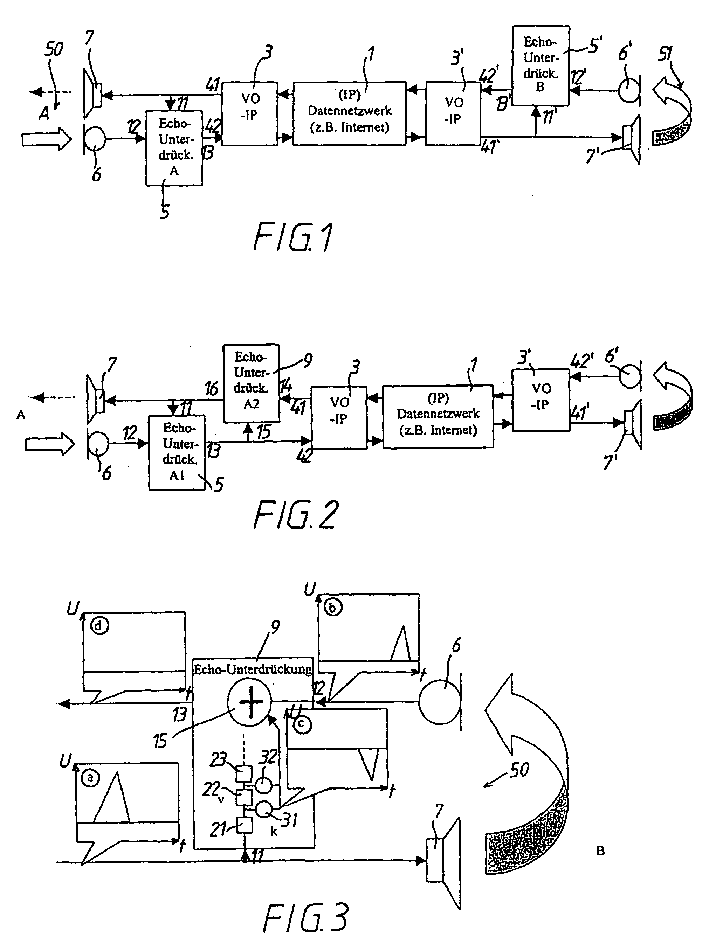

In Fig.1 ist ein Teil eines Übertragungssystems zur Übertragung von Sprachinformation für mehrere Teilnehmer eines Datenübertragungsnetzes 1 gezeigt, wobei im besonderen eine Sprachdatenverbindung zwischen zwei Teilnehmern 50, 51 dargestellt ist. Jeder Teilnehmer ist jeweils mit einer Sprech- und einer Hörvorrichtung 6, 6' und 7, 7' ausgerüstet ist, über die ein Sprachsignal erzeugt bzw. hörbar gemacht werden kann. Für das Datenübertragungsnetz 1, über welches die Sprachdatenübertragung erfolgt, ist in Fig.1 das Internet mit dem für alle Teilnehmer gemeinsamen IP-(Internet Protocol)-Protokoll angegeben. Es kann die Sprachdatenübertragung im Rahmen der Erfindung über jedes beliebige, ähnliche Datenübertragungsnetz, z.B. LAN, Intranet, o.ä., erfolgen. Die zu übertragenden Daten werden in Datenpakete unterteilt und während der Übertragung zwischen den Teilnehmern ausgetauscht, wobei innerhalb des jeweiligen Netzes der Transport der Datenpakete je nach verfügbaren Übertragungsleitungen verwaltet wird. Es können auch mehrere, miteinander gekoppelte Netze für eine solche Sprachübertragung eingesetzt werden, wobei bei unterschiedlichen Protokollen in diesen Netzen zur Umwandlung geeignete Einheiten vorgesehen sein müssen.

In vielen Fällen findet die Übertragung der Datenpakete auf der Grundlage des Internet-Protokolls (IP) statt, wobei jeder Teilnehmer über eine in einer Sprachdatenübertragungseinheit 3 beinhalteten Empfangs- und Sendeeinheit mit dem IP-Netzwerk 1 in Verbindung steht.

Die Sprachdatenübertragungseinheit 3 umfaßt weiters eine Sprach-Datenwandlereinheit zur Umwandlung der Datenpakete in ein Sprachsignal und umgekehrt. Weiters können verschiedene Signalkodierungen, z.B. PCM-Kodierung, Anwendung finden, die beim Empfang und beim Senden entsprechend berücksichtigt werden müssen.

Die vom Teilnehmer 50 über die Empfangseinheit empfangene Sprachinformation wird in der Sprachdatenübertragungseinheit 3 in ein Sprachsignal gewandelt und über den Ausgang 41 zur Hörvorrichtung 7 weitergeleitet und dort wiedergegeben. Das vom Teilnehmer 50 über die Sprechvorrichtung 6 erzeugte Sprachsignal gelangt über einen Eingang 42 in die Sendeeinheit, wird dort in Sprachinformation gewandelt und gesendet, welche Sendeeinheit in der Sprachdatenübertragungseinheit 3 beinhaltet ist. Nach Aufbau einer Verbindung zwischen dem Teilnehmer 50 und dem Teilnehmer 51 über das Datenübertragungsnetz 1 kann der Teilnehmer 51 mit seiner Hörvorrichtung 7' das in der Sprechvorrichtung 6 erzeugte Sprachsignal nach Wandlung in Datenpakete, Übertragung und Rückwandlung der Datenpakete hörbar machen. Der Teilnehmer 51 kann seinerseits über die Sprechvorrichtung 6' ein Sprachsignal erzeugen, das für den Teilnehmer 50 nach entsprechender Übertragung hörbar ist. Während des Gesprächs entsteht eine Rückwirkung des vom Teilnehmer 50 zum Teilnehmer 51 übertragenen Sprachsignals, da dieses teilweise durch akustische Kopplung oder direkt von der Hörvorrichtung 7' in die Sprechvorrichtung 6' gelangt und dort zu einem Sprachsignal gewandelt wird, das dem gesendeten Sprachsignal mit geringerer Amplitude entspricht.

Ist der Teilnehmer 50 aktiv und spricht in die Sprechvorrichtung, z.B. ein Mikrophon 6, entsteht auf der Seite des Teilnehmers 51 ein Echo durch die akustische Kopplung der Sprechvorichtung 6' und der Höreinrichtung 7', z.B. einem Lautsprecher, welches durch die Echo-Unterdrückungseinheit 5' gelöscht wird, indem von dem in der Sprechvorrichtung 6' erzeugten Sprachsignal, das am Additions-Eingang 12' der Echo-Unterdrückungseinheit 5' anliegt, das von der Empfangseinheit der Einheit 3' an den Subtraktionseingang 11' kommende, verzögerte Sprachsignal subtrahiert wird. In derselben Weise wird das durch die Hörvorrichtung 7 hervorgerufene akustische Signal teilweise in die Sprechvorrichtung 6 gelangen und würde über diese als Echo an den Teilnehmer 51 zurückgesendet werden. In der Echo-Unterdrückungseinheit 5 wird nun von dem in der Sprechvorrichtung 6 erzeugten Signal das über die Hörvorrichtung 7 abgegebene Sprachsignal abgezogen und damit vom Echo befreit.

Für den Fall, daß die Echo-Unterdrückungseinheit auf der Seite des Teilnehmers 51 versagt oder daß sie aus Kostengründen nicht implementiert sein sollte, wird das Übertragungssystem gemäß Fig.2 auf der Seite des Teilnehmers 50 erweitert.

Erfindungsgemäß wird dies dadurch erreicht, daß eine weitere Echo-Unterdrückungseinheit 9 mit einem Additions- und einem Subtraktions-Eingang 14, 15 vorgesehen ist, deren Ausgang 16 mit der Hörvorrichtung 7 verbunden ist. Der Subtraktions-Eingang 15 ist dabei mit dem Sendeeingang 42 der Sprachdatenübertragungseinheit 3 und der Additions-Eingang 14 mit dem Empfangseingang 41 der Sprachdatenübertragungseinheit 3 verbunden.

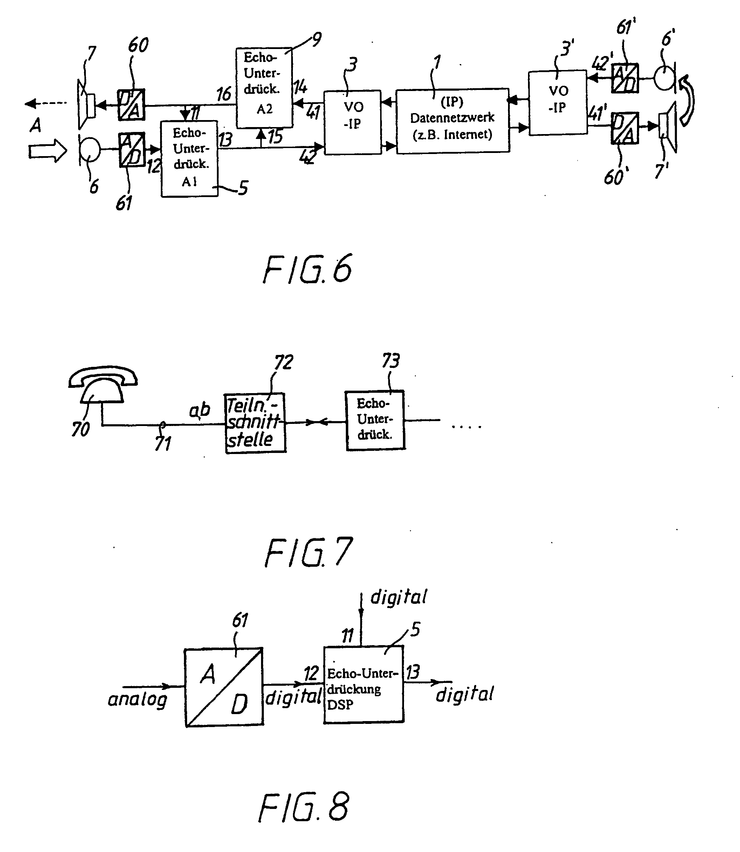

Dabei wird von dem beim Teilnehmer 51 entstehenden und über das Datenübertragungsnetz 1 übertragenen Empfangssignal auf der Seite des mit diesem verbundenen Teilnehmers 50 das mittels einer Verzögerungskette mindestens um die Netzverzögerungszeit verzögerte, das Echo verursachende und mit Koeffizienten k gewichtete Sprachsignal subtrahiert. Die Darstellung des erfindungsgemäßen Übertragungssystems ist in Fig.2 in vereinfachter Form vorgenommen worden, wobei analoge Sprachsignale in den Bcho-Unterdrückungseinheiten 5, 9 subtrahiert werden, um die Echosignale auszulöschen. In modernen . Systemen geschieht diese Echo-Unterdrückung allerdings hauptsächlich in digitaler Form, wie es in Fig.6 gezeigt ist. In allgemeiner Darstellung ist dabei jeweils in den Pfad zu den Sprachvorrichtungen 6 bzw. 6' und zu den Hörvorrichtungen 7 bzw. 7' jeweils ein Analog/Digital-Wandler. 61 bzw. 61' und ein Digital/Analog-Wandler 60 bzw. 60' zwischengeschaltet, über die das zu sendende analoge Sprachsignal in digitale Sprachinformation und die empfangene bzw. von der Echo-Unterdrückungseinheit 9 kommende digitale Sprachinformation in ein analoges Sprachsignal umgewandelt wird. Damit ist klargestellt, daß die Echo-Unterdrückung selbst in der jeweiligen Echo-Unterdrückungseinheit 5, 9 in digitaler Form geschieht. In Fig. 8 ist ein Detail des Blockschaltbildes gemäß Fig. 6 zur Veranschaulichung nochmals hervorgehoben. Die Echo-Unterdrückungseinheit ist in Form eines DSP oder eines schnellen Rechners realisiert. Die Echo-Unterdrückungseinheit 9 kann in einer praktischen Realisierung in einem einzigen Rechner oder DSP mit der Echo-Unterdrückungseinheit 9 zusammengefaßt sein.

Während die Echo-Unterdrückungseinheit 5 weiterhin durch ein konventionelles System zur Unterdrückung von Echos mit einer Laufzeit von maximal 64 ms ist, muß die weitere Echo-Unterdrückungseinheit 9 in der Lage sein, Echolaufzeiten im Bereich z.B. von 500ms bis 1500 ms zu unterdrücken, da zwischen dem Subtraktionseingang 15 und dem Additionseingang 14 die volle Verzögerungszeit des Datennetzwerkes 1 wirksam wird. Aus diesem Grund eignen sich die bekannten Echo-Unterdrückungseinheiten nur sehr bedingt für die Verwendung bei paketorientierter Übertragung. Dazu sei die Wirkungsweise einer bekannten Echo-Unterdrückungseinheit anhand der Darstellung in Fig.3 näher erläutert, wobei in den Diagrammen a, b, c, d der Zeitverlauf des jeweiligen Signals an den mit den von den Diagrammen wegweisenden Pfeilen gekennzeichneten Stellen dargestellt ist. Vorausgesetzt wird dabei wieder, daß die Echo-Unterdrückung sowohl in analoger als auch in digitaler Form geschehen kann. Die gezeigten Signale liegen bei digitaler Ausführung der Echo-Unterdrückungseinheit. als digitalisierte Abtastwerte bzw. Sprachinformation vor.

Das von der Empfangseinheit der Sprachdatenübertragungseinheit 3 kommende Sprachsignal ist beispielhaft im Diagramm a der Fig. 3 abgebildet, welches am Ort des Teilnehmers 50 ein oder mehrere Echos, je nach Art und Länge des vom Schall durchlaufenen Weges zwischen der Hörvorrichtung 7 und der Sprechvorrichtung 6, erzeugt. In Diagramm b ist das Echosignal als gegenüber dem Diagramm a abgeschwächtes Signal dargestellt, das entsprechend zeitverzögert ist. Dieses Signal b gelangt in den Additionseingang 12 der Echo-Unterdrückungseinheit 9. Signal a wird am Subtraktionseingang 11 der Echo-Unterdrückungseinheit 9 eingespeist, sodaß dieses invertiert und in einer Verzögerungskette mit Verzögerungsgliedern 21, 22, 23 verzögert wird. Zwischen diesen befinden sich Anzapfungsstellen 31, 32, an denen das verzögerte Signal abgegriffen, mit einem Koeffizienten k abgeschwächt und an den mit "+" gekennzeichneten Summierpunkt gefuhrt werden kann. Über diese verschiedenen Anzapfungsstellen können daher auch mehrfache Echos zugleich kompensiert werden, da für jede mögliche Zeitlage des Echosignals eine entsprechende Anzapfungsstelle vorgesehen werden kann.

Durch Subtraktion des verzögerten und abgeschwächten Signals a von dem in der Sprechvorrichtung 6 erzeugten Echosignals entsteht das im wesentlichen echofreie Signal d. Für die Berechnung der Koeffizienten sind mehrere bekannte Verfahren geeignet, z.B. kann ein (N)LMS (Normalized) Least Mean Square-Fit vorgenommen werden, über den die Koeffizienten für ein Minimum des kompensierten Signals berechnet werden kann.

Eine solche Echo-Unterdrückungseinheit, wie sie gemäß Fig.3 Stand der Technik ist, eignet sich für herkömmliche Telephonieanwendungen sehr gut, erfüllt aber ihre Aufgaben nur bedingt, wenn die Sprachübertragung über ein paketorientiertes Datennetzwerk erfolgen soll. Durch die hohe Verzögerungszeit innerhalb des Datennetzwerkes 1 wächst der Aufwand für die Echounterdrückung als auch die Einstellzeit der Koeffizienten k proportional zur maximalen Echolaufzeit.

Gemäß einer Ausführungsforin der Erfindung kann diesem Problem dadurch abgeholfen werden, daß das erste Verzögerungsglied 20 der Verzögerungskette eine relativ hohe Speicher-Verzögerungszeit aufweist, wie dies in Fig.5 dargestellt ist.

Anstatt eine übliche Verzögerungskette anzuwenden, die Anzapfungen vom Zeitpunkt 0 bis zur maximalen Echolaufzeit aufweist, beginnt die Verzögerungskette mit einem Verzögerungsglied 20 mit relativ langer Speicher-Verzögerungszeit, die im wesentlichen der minimalen Gesamtlaufzeit der Sprachdatensignale in beiden Richtungen des Datennetzwerkes entspricht. Die Echo-Unterdrückungseinheit 9 wirkt dann z.B. nicht - wie bisher bekannt - für Echos im Bereich von 0 bis 800 ms sondern nur für Echos im Bereich von 600 ms bis 800 ms. Aufgrund der Gesamtlaufzeit durch das Datennetzwerk 1 können in diesem Anfangszeitraum keine Echos entstehen. Der Vorteil dieser Grundverzögerung liegt darin, daß die Echounterdrückungseinheit viel weniger Rechenleistung z.B eines Signalprozessors und auch Speicher benötigt, da sowohl weniger Koeffizienten k berechnet als auch weniger Multiplikationen bzw. Additionen für die Berechnung des inversen verzögerten Signals durchgeführt werden müssen.

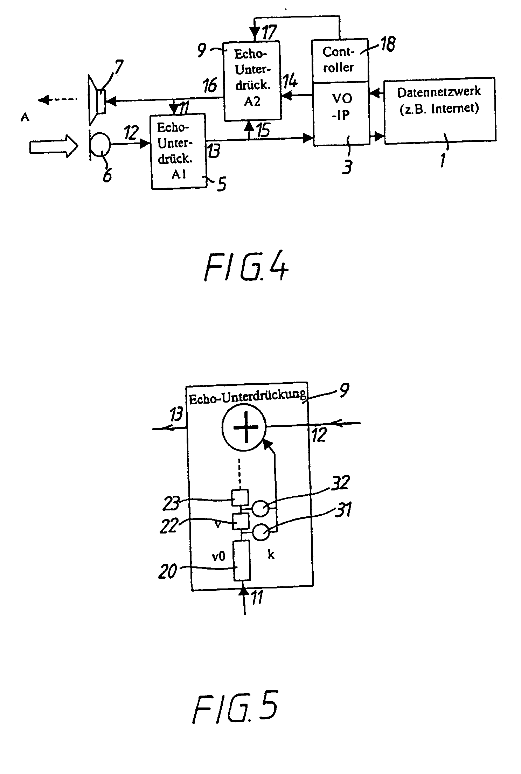

Eine weitere Verbesserung der Echounterdrückung kann erzielt werden, wenn gemäß einem in Fig.4 gezeigten Ausführungsbeispiel der Erfindung die weitere Echo-Unterdrückungseinheit 9 einen Steuereingang 17 zur Steuerung einer der Mindestverzögerungszeit des Netzwerks, das ist die vorgenannte Gesamtlaufzeit in beiden Richtungen, entsprechenden Speicher-Verzögerungszeit des Sprachsignals bzw. der Sprachinforination aufweist, wobei der Steuereingang 17 mit dem Ausgang einer mit der Sprachdatenübertragungseinheit 3 verbundenen Steuereinheit 18 verbunden ist. In gleicher Weise wie im Ausführungsbeispiel gemäß Fig.6 können wieder entsprechende Analog/Digital-Wandler bzw. Digital-Analog-Wandler und digitale Echo-Unterdrückungseinheiten 5, 9 vorgesehen sein.

Dadurch können über die Steuereinheit 18 verschiedene Zustände an die Echo-Unterdrückungseinheit 9 signalisiert werden. So kann zum Beispiel ein verlorengegangenes Sprachdatenpaket innerhalb der eintreffenden Datenpakete detektiert und die Echo-Unterdrückungseinheit 9 entsprechend gesteuert werden, sodaß kein falsches inverses Signal c (Fig.3) erzeugt wird, das dann auf kein passendes Signal b (Fig.3) treffen würde.

Weiters ist es üblich, eine Übermittlungsunterbrechung während Sprachpausen vorzunehmen. Um zu verhindern, daß die fehlenden Datenpakete eine Verschiebung der Echo-Auslöschungszeitpunkte bewirken, kann beispielsweise vorgesehen sein, kann beispielsweise eine Neuberechnung der Koeffizienten verhindert werden.

Es kann auch versucht werden, bei Wiederholung des vorangegangenen Sprachdatenpakets das zugehörige inverse Signal zu erzeugen. Dies ist aber nur dann möglich, wenn die hiezu notwendigen Sprachdaten noch in der Verzögerungskette enthalten sind. Diese müßte zu diesem Zweck entsprechend länger ausgeführt werden.

In Datennetzwerken, in denen sich die Gesamtlaufzeit verändern kann, können alternativ zwei Verbesserungen vorgenommen werden.

Ist die Veränderung der Laufzeit bekannt aber nicht quantitativ feststellbar, werden einfach die Koeffizienten k der Echo-Unterdrückungseinheit auf Null gesetzt, um zu verhindern, daß ein doppeltes Echo hörbar wird. Sollte aber durch eine geeignete Vorrichtung die Netz-Verzögerungszeit-Änderung, z.B. durch Auswertung der Zeitinformation des Echtzeit-Protokolls, bekannt sein, kann ein permanentes Nachführen der Verzögerungszeit des ersten Verzögerungsgliedes 20 (Fig.5) mit relativ langer Speicherverzögerungszeit erfolgen, sodaß eine sehr effiziente Auslöschung mit geringer Rechner- und Speicherkapazität ausführbar ist.

Es wird dabei die Änderung der Netz-Verzögerungszeit gemessen und die Werte der den Verzögerungsgliedern 20, 22, 23 zugeordneten Koeffizienten k innerhalb der Verzögerungskette entsprechend dieser Änderung, zeitlich gesehen nach vor oder zurück, verschoben. Die Speicher-Verzögerungszeit des ersten Verzögerungsgliedes 20 mit der relativ hohen Verzögerungszeit kann über die Sprachdatenübertragungseinheit 3 gesteuert werden und die Verschiebung der Koeffizienten k innerhalb der Verzögerungskette automatisch mit der Veränderung der Verzögerungszeit des ersten Verzögerungsgliedes 20 vorgenommen werden.

Im Ausführungsbeispiel gemäß Fig. 7 ist eine Variante der Erfindung abgebildet, in der die Sprech- und die Hörvorrichtung durch ein Teilnehmerendgerät 70 verwirklicht sind, welches über eine Teilnehmerleitung 71 an eine Teilnehmerschnittstelle 72 angeschlossen ist, die in analoger oder digitaler Form vorgesehen sein kann. In einer Echo-Unterdrückungseinheit 73 sind die Echo-Unterdrückungseinheiten 5, 9 aus Fig. 6 zusammengefaßt. Die weitere Anbindung an das Datenübertragungsnetzwerk geschieht in gleicher Form wie in Fig.6. Dadurch kann die erfindungsgemäße Echo-Unterdrückung auch bei Einbeziehung einer Teilnehmerschnittstelle angewandt werden.

## Patentansprüche

1. Übertragungssystem zur Übertragung von Sprachinformation innerhalb zumindest eines mehrere Teilnehmer verbindenden Datenübertragungs-Netzes, z.B. LAN, Intranet, Internet, in welchem die Übertragung mittels Datenpaketen auf der Grundlage zumindest eines gemeinsamen Protokolls, z.B. Internet-Protokolls, erfolgt, und jeder Teilnehmer über eine eine Sende- und Empfangseinheit sowie eine Sprach-Datenwandlereinheit beinhaltende Sprachdatenübertragungseinheit (3), gegebenenfalls einen Analog/Digital-Wandler (61) und einen Digital/Analog-Wandler (60), sowie eine daran angeschlossene Sprech- und Hörvorrichtung (6, 7) mit dem Netz in Verbindung steht, wobei die Sprechvorrichtung (6) oder der zwischengeschaltete Analog/Digital-Wandler (61) über einen Additions-Eingang (12) einer Echo-Unterdrückungseinheit (5) und deren Ausgang (13) mit der Sendeeinheit verbunden ist und ein Subtraktions-Eingang (11) der Echo-Unterdrückungseinheit (5) mit der Hörvorrichtung (7) oder dem zwischengeschalteten Digital/Analog-Wandler (60) verbunden ist, **dadurch gekennzeichnet, daß** eine weitere Echo-Unterdrückungseinheit (9) mit einem Additions- und einem Subtraktions-Eingang (14, 15) vorgesehen ist, deren Ausgang (16) mit der Hörvorrichtung (7) oder mit dem zwischengeschalteten Digital/Analog-Wandler (60) verbunden ist, und daß der Subtraktions-Eingang (15) mit der Sendeeinheit der Sprachdatenübertragungseinheit (3) und der Additions-Eingang (14) mit der Empfangseinheit der Sprachdatenübertragungseinheit (3) verbunden ist.

2. Übertragungssystem nach Anspruch 1, **dadurch gekennzeichnet, daß** die weitere Echo-Unterdrückungseinheit (9) einen Steuereingang (17) zur Steuerung einer der Mindestverzögerungszeit des Netzwerks entsprechenden Speicher-Verzögerungszeit des Sprachsignals oder der Sprachinformation aufweist, wobei der Steuereingang (17) mit dem Ausgang einer mit der Sprachdatenübertragungseinheit (3) verbundenen Steuereinheit (18) verbunden ist.

3. Übertragungssystem nach Anspruch 1 oder 2 mit einer Echo-Unterdrückungseinheit, welche eine aus mehreren Verzögerungsgliedern gebildete Verzögerungskette umfaßt, **dadurch gekennzeichnet, daß** das erste Verzögerungsglied (20) der Verzögerungskette eine Speicher-Verzögerungszeit aufweist, die größer oder gleich der minimalen Gesamtlaufzeit der Sprachdatensignale in beiden Richtungen des Datennetzwerkes (1) entspricht.

4. Übertragungssystem nach Anspruch 3, **dadurch gekennzeichnet, daß** die Speicher-Verzögerungszeit des ersten Verzögerungsgliedes (20) der Verzögerungskette über die Sprachdatenübertragungseinheit (3) steuerbar ist.

5. Übertragungssystem nach Anspruch 4, **dadurch gekennzeichnet, daß** die Steuerung der Speicher-Verzögerungszeit über die Sprachdatenübertragungseinheit (3) durch Auswertung der Zeitinformation des Echtzeit-Protokolls erfolgt.

6. Verfahren zur Übertragung von Sprachinformation innerhalb zumindest eines mehrere Teilnehmer verbindenden Datenübertragungs-Netzwerkes, z.B. LAN, Intranet, Internet, in welchem die Übertragung mittels Datenpaketen auf der Grundlage zumindest eines gemeinsamen Protokolls, z.B. Internet-Protokolls, erfolgt, wobei die von jedem Teilnehmer über eine Empfangseinheit empfangene Sprachinformation in ein Sprachsignal gewandelt und über eine Hörvorrichtung (7) wiedergegeben und das von jedem Teilnehmer über eine Sprechvorrichtung (6) erzeugte Sprachsignal in Sprachinformation gewandelt und in einer Sendeeinheit gesendet wird, und wobei zur Echoauslöschung die über die Empfangseinheit empfangene Sprachinformation oder die in ein Sprachsignal gewandelte Sprachinformation verzögert und mit Koeffizienten gewichtet und von dem in der Sprechvorrichtung (6) erzeugten Sprachsignal oder dem in eine entsprechende Sprachinformation gewandelten Sprachsignal subtrahiert wird, **dadurch gekennzeichnet, daß** von dem beim jeweils anderen Teilnehmer (50, 51) entstehenden und über das Datenübertragungsnetz (1) rückübertragenen Echosignal auf der Seite des mit diesem verbundenen Teilnehmers (50, 51) das mittels einer Verzögerungskette (21, 22, 23) mindestens um die Netzverzögerungszeit verzögerte, das bzw. die Echo verursachende und mit den Koeffizienten (k) gewichtete Sprachsignal oder Sprachinformation subtrahiert wird.

7. Verfahren nach Anspruch 6, **dadurch gekennzeichnet, daß** der bei der Übertragung entstehende Verlust an Datenpaketen detektiert wird und in Abhängigkeit davon die Subtraktion des entsprechenden, verzögerten Sprachsignals oder der entsprechenden, verzögerten Sprachinformation unterdrückt wird.

8. Verfahren nach einem der Ansprüche 6 oder 7, **dadurch gekennzeichnet, daß** bei Verlust eines oder mehrerer Datenpakete das jeweils vorangegangene Sprachdatenpaket wiederholt wird.

9. Verfahren nach Anspruch 8, **dadurch gekennzeichnet, daß** bei Wiederholung des jeweils vorangegangenen Sprachdatenpakets die Subtraktion eines entsprechenden Sprachsignals bzw. einer entsprechenden Sprachinformation auf der Seite des verbundenen Teilnehmers unterdrückt wird.

10. Verfahren nach Anspruch 8, **dadurch gekennzeichnet, daß** bei Wiederholung des jeweils vorangegangenen Sprachdatenpakets das zugehörige gespeicherte Sprachsignal bzw. die zugehörige gespeicherte Sprachinformation des verbundenen Teilnehmers mit Verzögerung und Gewichtung subtrahiert wird.

11. Verfahren nach Anspruch 6, **dadurch gekennzeichnet, daß** bei Auftreten einer Änderung der Netz-Verzögerungszeit die Koeffizienten (k) der Verzögerungskette (20, 22, 23) gesetzt werden.

12. Verfahren nach Anspruch 6, **dadurch gekennzeichnet, daß** die Änderung der Netz-Verzögerungszeit gemessen wird, und daß die Werte der den Verzögerungsgliedem (20, 22, 23) zugeordneten Koeffizienten k innerhalb der Verzögerungskette entsprechend dieser Änderung verschoben werden.

13. Verfahren nach Anspruch 12, **dadurch gekennzeichnet, daß** die Speicher-Verzögerungszeit des ersten Verzögerungsgliedes (20) über die Sprachdatenübertragungseinheit (3) gesteuert wird, und daß die Verschiebung der Koeffizienten k innerhalb der Verzögerungskette automatisch mit der Veränderung der Verzögerungszeit des ersten Verzögerungsgliedes (20) vorgenommen wird.

14. Verfahren nach Anspruch 13, **dadurch gekennzeichnet, daß** zur Steuerung der Speicher-Verzögerungszeit die Zeitinformation des Echtzeit-Protokolls ausgewertet wird.

## Claims

1. A transmission system for transmitting voice information within at least one data transmission network connecting several subscribers, e.g. LAN, intranet, internet, in which the transmission occurs by means of data packets on the basis of at least one common protocol, e.g. internet protocol, and each subscriber is in connection with the network via a voice data transmission unit (3) which contains a transmitting and receiving unit as well as a voice data converter unit, optionally an analog-to-digital converter (61) and a digital-to-analog converter (60), as well as a voice communication and hearing apparatus (6, 7) which is connected thereto, with the voice communication apparatus (6) or the interposed analog-to-digital converter (61) is connected with the transmitting unit via an addition input (12) of an echo cancellation unit (5) and its output (13), and a subtraction input (11) of the echo cancellation unit (5) is connected to the hearing apparatus (7) or the interposed digital-to-analog converter (60), **characterized in that** a further echo cancellation unit (9) with an addition and a subtraction input (14, 15) is provided whose output (16) is connected to the hearing apparatus (7) or the interposed digital-to-analog converter (60), and that the subtraction input (15) is connected with the transmitting unit of the voice data transmission unit (3) and the addition input (14) is connected with the receiving unit of the voice data transmission unit (3).

2. A transmission system according to claim 1, **characterized in that** the further echo cancellation unit (9) comprises a control input (17) for controlling a memory delay time of the voice signal or voice information which corresponds to the minimum delay time of the network, with the control input (17) being connected to the output of a control unit (18) connected to the voice data transmission unit (3).

3. A transmission system according to claim 1 or 2 with an echo cancellation unit which comprises a delay line formed from several delay elements, **characterized in that** the first delay element (20) of the delay line comprises a memory delay time which is larger than or equal to the minimum total propagation time of the voice data signals in both directions of the data network (1).

4. A transmission system according to claim 3, **characterized in that** the memory delay time of the first delay element (20) of the delay line is controllable via the voice data transmission unit (3).

5. A transmission system according to claim 4, **characterized in that** the control of the memory delay time via the voice data transmission unit (3) occurs by evaluation of the time information of the real-time protocol.

6. A method for transmitting voice information within at least one data transmission network connecting several subscribers, e.g. LAN, intranet, internet, in which the transmission occurs by means of data packets on the basis of at least one common protocol, e.g. internet protocol, with the voice information received by each subscriber via a receiving unit being converted into a voice signal and is reproduced by means of a hearing apparatus (7) and with the voice signal produced by each subscriber via a voice apparatus (6) being converted into voice information and transmitted in a transmitting unit, and with the voice information which is received via the receiving unit or the voice information converted into a voice signal being delayed for the purpose of echo cancellation and being weighted with coefficients and being subtracted from the voice signal generated in the voice apparatus (6) or converted into a respective voice information, **characterized in that** the voice signal or voice information which is delayed by means of the delay line (21, 22, 23) at least by the network delay time and which causes the echo is subtracted from the echo signal arising at the respective other subscriber (50, 51) and being retransmitted via the data transmission network (1) on the side of the subscriber (50, 51) connected with the same.

7. A method according to claim 6, **characterized in that** the loss of data packets arising during the transmission is detected and the subtraction of the respective delayed voice signal or the respective delayed voice information is suppressed depending thereon.

8. A method according to claim 6 or 7, **characterized in that** in the case of loss of one or several data packets the respective preceding voice data packet is repeated.

9. A method according to claim 8, **characterized in that** in the case of the repetition of the respectively preceding voice data packet the subtraction of a respective voice signal or a respective voice information on the side of the connected subscriber is suppressed.

10. A method according to claim 8, **characterized in that** in the case of the repetition of the respective preceding voice data packet the associated stored voice signal or the associated stored voice information of the connected subscriber is subtracted with delay and weighting.

11. A method according to claim 6, **characterized in that** in the occurrence of a change in the network delay time the coefficients (k) of the delay line (20, 22, 23) are set.

12. A method according to claim 6, **characterized in that** the change of the network delay time is measured and that the values of the coefficients k associated with the delay elements (20, 22, 23) are displaced within the delay line according to said change.

13. A method according to claim 12, **characterized in that** the memory delay time of the first delay element (20) is controlled via the voice data transmission unit (3) and that the displacement of the coefficients k within the delay line is performed automatically with the change of the delay time of the first delay element (20).

14. A method according to claim 13, **characterized in that** the time information of the real-time protocol is evaluated for controlling the memory delay time.

## Revendications

1. Système de transmission d'informations vocales au sein d'au moins un réseau de transmission de données reliant plusieurs abonnés tel que LAN, Intranet, Internet dans lequel la transmission se fait par paquets de données sur la base d'au moins un protocole commun, un protocole Internet par exemple, et chaque abonné est relié au réseau par l'intermédiaire d'une unité de transmission de données vocales (3) contenant une unité d'émission et une unité de réception ainsi qu'une unité de conversion de données vocales, le cas échéant d'un convertisseur analogique numérique (61) et d'un convertisseur numérique analogique (60), ainsi que d'un microphone et d'un écouteur (6, 7) qui y sont raccordés, le microphone (6) ou le convertisseur analogique numérique (61) interposé étant relié à l'unité d'émission par l'intermédiaire d'une entrée d'addition (12) d'une unité de suppression d'écho (5) et de sa sortie (13) et une entrée de soustraction (11) de l'unité de suppression d'écho (5) étant reliée à l'écouteur (7) ou au convertisseur numérique analogique (60) interposé, **caractérisé en ce qu'**une unité de suppression d'écho supplémentaire (9) comportant une entrée d'addition et une entrée de soustraction (14, 15) est prévue dont la sortie (16) est reliée à l'écouteur (7) ou au convertisseur numérique analogique (60) interposé et que l'entrée de soustraction (15) est reliée à l'unité d'émission de l'unité de transmission de données vocales (3) et l'entrée d'addition (14), à l'unité de réception de l'unité de transmission de données vocales (3).

2. Système de transmission selon la revendication 1, **caractérisé en ce que** l'unité de suppression d'écho supplémentaire (9) comporte une entrée de commande (17) destinée à commander un temps de retard de stockage du signal vocal ou de l'information vocale correspondant au retard minimum du réseau, l'entrée de commande (17) étant reliée à la sortie d'une unité de commande (18) reliée à l'unité de transmission de données vocales (3).

3. Système de transmission selon la revendication 1 ou 2 avec une unité de suppression d'écho comprenant une chaîne de retard constituée de plusieurs éléments à retard, **caractérisé en ce que** le premier élément à retard (20) de la chaîne de retard comporte un temps de retard de stockage qui est supérieur ou égal au temps de propagation total minimum des signaux de données vocales dans les deux sens du réseau de données (1).

4. Système de transmission selon la revendication 3, **caractérisé en ce que** le temps de retard du premier élément à retard (20) de la chaîne de retard est commandable par l'unité de transmission de données vocales (3).

5. Système de transmission selon la revendication 4, **caractérisé en ce que** le temps de retard de stockage est commandé par l'unité de transmission de données vocales (3) en évaluant l'information temporelle du protocole en temps réel.

6. Procédé de transmission d'informations vocales au sein d'au moins un réseau de transmission de données reliant plusieurs abonnés tel que LAN, Intranet, Internet dans lequel la transmission se fait par paquets de données sur la base d'au moins un protocole commun, un protocole Internet par exemple, l'information vocale reçue par chaque abonné par le biais de l'unité de réception étant convertie en un signal vocal et est reproduite par le biais d'un écouteur (7) et le signal vocal produit par chaque abonné étant converti en information vocale par l'intermédiaire d'un microphone (6) et émis dans une unité d'émission et l'information vocale reçue par le biais de l'unité de réception ou l'information vocale convertie en un signal vocal étant retardée et pondérée avec des coefficients et est soustrait du signal vocal produit dans le microphone (6) ou du signal vocal converti en une information vocale correspondante, **caractérisé en ce que** l'on soustrait du côté de l'abonné (50, 51) relié à un autre abonné le signal vocal ou l'information vocale pondérée avec les coefficients (k), produisant l'écho ou les échos et retardée d'au moins le temps de retard du réseau au moyen d'une chaîne de retard (21, 22, 23) du signal d'écho créé du côté de l'autre abonné (50, 51) respectif et renvoyé par le réseau de transmission de données (1).

7. Procédé selon la revendication 6, **caractérisé en ce que** l'on détecte les paquets de données perdus lors de la transmission et que l'on supprime la soustraction du signal vocal retardé correspondant ou l'information vocale retardée correspondante en fonction des paquets détectés.

8. Procédé selon l'une quelconque des revendications 6 ou 7, **caractérisé en ce qu'**en cas de perte d'un ou de plusieurs paquets de données l'on répète le paquet de données vocales qui le ou les précédait.

9. Procédé selon la revendication 8, **caractérisé en ce que**, lorsqu'on répète le paquet de données vocales précédent, on supprime la soustraction d'un signal vocal correspondant ou d'une information vocale correspondante du côté de l'abonné en ligne.

10. Procédé selon la revendication 8, **caractérisé en ce que**, lorsqu'on répète le paquet de données vocales précédent, on soustrait le signal vocal mémorisé associé ou l'information vocale mémorisée associée de l'abonné en ligne avec retard et pondération.

11. Procédé selon la revendication 6, **caractérisé en ce que** l'on introduit les coefficients (k) de la chaîne de retard (20, 22, 23) en cas de changement du temps de retard du réseau.

12. Procédé selon la revendication 6, **caractérisé en ce que** l'on mesure le changement du temps de retard du réseau et que les valeurs des coefficients k associés aux éléments à retard (20, 22, 23) sont déplacées au sein de la chaîne de retard en fonction de ce changement.

13. Procédé selon la revendication 12, **caractérisé en ce que** le temps de retard de stockage du premier élément à retard (20) est commandé par l'intermédiaire de l'unité de transmission de données vocales (3) et que le déplacement des coefficients k au sein de la chaîne de retard s'effectue automatiquement lors du changement du temps de retard du premier élément à retard (20).

14. Procédé selon la revendication 13, **caractérisé en ce que** l'on évalue l'information temporelle du protocole en temps réel pour commander le temps de retard de stockage.
